# EUROPEAN PATENT APPLICATION

(11) **EP 4 663 490 A1**
(43) Date of publication of application: **17.12.2025**
(21) Application number: 24181308.8
(22) Date of filing: 11.06.2024
(51) Int. Cl.: B60T 13/66, B60T 13/74, B60T 17/22, B61H 13/00, F16D 121/24, F16D 125/52, F16D 127/06, F16D 66/00

(54) **BRAKE SYSTEM FOR A RAIL VEHICLE, COMPUTER-IMPLEMENTED METHOD, COMPUTER PROGRAM AND NON-VOLATILE DATA CARRIER**

(71) Applicant: Dellner Bubenzer AB, 781 70 Borlänge (SE)
(72) Inventor: LENNARTSSON, Svante, 791 46 FALUN (SE); PRIM, Viktor, 811 61 SANDVIKEN (SE); GUSTAVSSON, Claes-Göran, 723 53 VÄSTERÅS (SE); LUNDELL, Anders, 443 32 LERUM (SE); LARSSON, Lennart, 602 13 NORRKÖPING (SE); JÖNSSON, Per-Anders, 183 39 TÄBY (SE)
(74) Representative: Brann AB

(57) **Abstract**

A rail vehicle brake system includes a brake unit (200) that receives an electric brake-force signal (BF) designating a set force value (Fₛₑₜ). The brake unit (200) contains: pressing members (211, 212), a rotatable member mechanically linked a wheel of the rail vehicle, a gear assembly (220) that operates mechanically on the pressing members (211; 212) so as to move them towards or away from the rotatable member, an electric motor (230) that, in response to the electric brake-force signal (BF), acts on the gear assembly (220) to cause the gear assembly (220) to operate the pressing members (211; 212), a load-cell sensor (250) produces a sensor signal (F) representing the force applied by the pressing members (211, 212), and a locking mechanism that locks the pressing members (211; 212). The brake actuator (120) obtains the sensor signal (F). When the magnitude of the applied force matches the set force value (Fₛₑₜ), the brake actuator (120) controls the locking mechanism to lock the pressing members (211; 212). The locking mechanism is self-locking, included in and forms an integral part of the gear assembly (220).

## Description

### TECHNICAL FIELD

The present invention relates generally to immobilization of rail vehicles. Especially, the invention relates to a system for effecting a parking-brake functionality in a rail vehicle according to the preamble of claim 1 and a corresponding computer-implemented method. The invention also relates to a computer program and a non-volatile data carrier storing such a computer program.

### BACKGROUND

For obvious reasons, it is of utmost importance that a parked rail vehicle cannot start to move unintentionally, for example without first releasing its parking brake.

Traditionally, most tractive rail vehicles, passenger coaches and some freight wagons have been equipped with various kinds of hand-operated parking brakes that act directly on the vehicle's brake linkage. When activated, such a brake prevents wheel rotation independently of the pneumatic brake. The parking brake is therefore suitable for securing parked wagons and coaches from unintentional movement. Such mechanical parking brakes are advantageous in relation to pneumatic brakes, since their holding power is not subjected to the risk of air leaks, which are unavoidable to occur over time in pneumatic systems.

The traditional parking brake may be designed as a screw brake that is operated from a brakeman's platform or driver's cabin. A manually operating parking brake is only suitable for securing static rail vehicles from rolling away. The manually operating parking brake may be designed as a hand wheel or as a spring-loaded brake.

An alternative to the parking brake is a brake back, or a so-called scotch block, which is a special type of steel or steel alloy wheel blocks that are wedged between the rails and the wheels to prevent parked rail vehicles from moving or rolling.

A direction-dependent pawl brake may be installed in vehicles operating on rack railways. Such a brake only brakes in the downhill direction. When driving uphill, the applied ratchet brake is released by a ratchet mechanism and prevents the rail vehicle from rolling backwards.

Today, the traditional pneumatically operated brake systems begin to be replaced by modern systems, for example including electro-mechanical brake actuators. This opens up both for new opportunities and new challenges. The latter may involve safeguarding that an electrically controlled brake maintains a particular clamping force.

US 2014/0222307 describes a method and apparatus for retightening an electromechanical brake of a type having an actuator driven by an electric motor to provide parking brake functionality, which presses a brake element against a brake body during a force stroke. A number of successive force strokes are performed wherein the force strokes occur when the brake clamping force falls below a predefined minimum setpoint value, wherein the respective force stroke occurs such that a predefined maximum clamping force is not exceeded, and based on the initial and the expected end temperatures of the brake body, a total clamping force loss to be expected is determined. The time of a final force stroke is selected such that the sum of the forces provided by the preceding force strokes, the force of the final force stroke, and the clamping force loss still to be expected exceeds the total clamping force loss to be expected.

DE 10 2022 210520 discloses a parking brake apparatus for a vehicle and a method for controlling a parking brake apparatus. The parking brake apparatus comprises a parking brake unit configured to exert a parking brake force onto a brake disc of the vehicle, a parking brake force sensing unit configured to detect an actual parking brake force exerted by the parking brake unit onto the brake disc, and a control unit configured to adjust the parking brake force to be substantially equal to a target parking brake force when the actual parking brake force detected by the parking brake force sensing unit deviates from the target parking brake force by more than a predetermined parking brake force threshold.

US 2022/0373046 reveals an electromechanical brake system that includes: a pair of pad plates to which a brake pad is attached, respectively, to press a disc that rotates with a wheel; a carrier on which the pair of pad plates are installed; a caliper housing slidably installed on the carrier; a piston movably installed in forward and backward direction inside the caliper housing; a power transfer part configured to press the pair of pad plates onto the disc by moving the piston; a brake actuator including a drive motor configured to provide a rotational force of the drive motor to the piston, and a reduction gear part configured to decelerate the rotational force of the drive motor and transmit the decelerated rotational force to the power transfer part; a parking actuator connected to the brake actuator to maintain a parking braking state of a vehicle; a force sensor configured to detect a clamping force due to a contact between the disc and the brake pad; and a controller configured to control the brake actuator and the parking actuator, wherein the controller is configured to control the parking actuator based on the clamping force detected through the force sensor.

US 2020/317181 shows a vehicle, an electronic parking brake system and a control method thereof. The control method includes: controlling, when the electronic parking brake system is started, an electronic parking clamping force to be equal to a first preset value to perform parking braking on the vehicle; detecting the electronic parking clamping force and a current state of the vehicle; and when detecting that the vehicle moves, adjusting the electronic parking clamping force according to a magnitude relationship between the electronic parking clamping force and the first preset value to perform the parking braking on the vehicle again.

EP 1 633 611 describes a parking brake monitor and adjustment control system that controls parking brake operation of an electromechanically actuated brake system, which applies a parking brake force to a wheel. The system includes a monitor circuit for producing an output signal which intermittently causes the brake system to readjust the parking brake force applied to the wheel.

WO 2019/042860 teaches an electro-mechanical brake actuator with a refeeding function for a parking brake of a rail vehicle and to a corresponding method. The electro-mechanical brake actuator has a pressing part for pressing against a brake disc; means for moving the pressing part onto or away from the brake disc; a locking device which is configured so as to lock the pressing part against the brake disc in a fixed manner; and a refeeding device which has a lock release device that is configured so as to release the lock of the pressing part against the brake disc if a specified refeeding condition has been satisfied. The refeeding device is configured so as to actuate the means for moving the pressing part when the pressing part is unlocked by the lock release device and causes the locking device to again lock the pressing part against the brake disc in a fixed manner.

Thus, parking-brake solutions are known, which aim at guaranteeing that a rail vehicle does not start to move unintentionally, for example because its brake discs have cooled off and therefore have become slightly thinner. However, the known solutions are problematic for various reasons, for instance referring to complexity or reliability aspects.

### SUMMARY

The object of the present invention is therefore to offer an uncomplicated electromechanical brake solution that solves the above problems and ensures that a specified braking force continues to be applied as long as needed.

According to the invention, the object is achieved by a brake system for a rail vehicle, which brake system includes a brake actuator and a brake unit. The brake actuator is configured to receive a parking-brake command that designates a set force value. In response to receiving the parking-brake command the brake actuator is configured to generate an electric brake-force signal, for example in the form of an electric current. The brake unit is configured to receive the electric brake-force signal. The brake unit contains: at least one pressing member, for example a pair of calipers with a respective brake pad; a rotatable member, for example a brake disc that is being mechanically linked to at least one wheel of the rail vehicle; a gear assembly arranged to operate mechanically on the at least one pressing member so as to move the at least one pressing member towards or away from the rotatable member; an electric motor configured to, in response to the electric brake-force signal, act on the gear assembly so as to cause the gear assembly to operate mechanically on the at least one pressing member; a load-cell sensor configured to produce a sensor signal representing a magnitude of a force applied by the at least one pressing member on the rotatable member; and a locking mechanism configured to lock the at least one pressing member. The brake actuator is configured to obtain the sensor signal, and check if the magnitude of the force represented by the sensor signal matches the set force value. If the magnitude of the force represented by the sensor signal matches the set force value, the brake actuator is further configured control the locking mechanism to lock the at least one pressing member. Here, this is a trivial action because the locking mechanism is self-locking, which is included in and forms an integral part of the gear assembly. For instance, the magnitude of the force represented by the sensor signal may be considered to match the set force value if the force represented by the sensor signal is within a predefined range from the set force value. In other words, measured forces being slightly above or below the set force value may also be acceptable.

The above brake system is advantageous because it does not require a dedicated locking mechanism, which renders the design simple. The control procedure also becomes straightforward because there is no need to perform any unlock or relock operations in connection adjusting the force applied by the at least one pressing member.

According to one embodiment of the invention, the gear assembly contains a worm gear arrangement with a gearing ratio configured to de facto prevent a position of the at least one pressing member to be altered by movement of the at least one pressing member. The worm gear arrangement thus also constitutes the locking mechanism. Preferably, to attain this locking functionality, the worm screw in the worm gear arrangement has a pitch angle below 8°, or more preferably below 5°, and most preferably below 3°, such that the worm gear arrangement is dynamically self-locking. Alternatively, or additionally, the worm gear arrangement has a gearing ratio of at least 1:47.

Preferably, the locking mechanism is configured to exclusively allow the at least one pressing member to be repositioned in response to action by the electric motor, which action is caused by the electric brake-force signal. Thus, the locking mechanism may for instance be implemented by a statically self-locking worm gear arrangement. To reposition the at least one pressing member, this namely requires action by the electric motor both ways, i.e. inwards motion as well as outwards motion in relation to the rotatable member.

According to another embodiment of the invention, the gear assembly is configured to automatically lock the at least one pressing member in any position in which the at least one pressing member is located in when the electric brake-force signal ceases to be generated. Such a functionally may for example be attained by a statically or dynamically self-locking worm gear arrangement as described above. Further, the brake actuator is configured to control the locking mechanism to lock the at least one pressing member by discontinuing the generation of the electric brake-force signal.

According to yet another embodiment of the invention the brake actuator is further configured to generate a status message confirming that the parking brake command has been effected in response to the magnitude of the force represented by the sensor signal matching the set force value. As result, a driver and/or any other personnel onboard or outside of the rail vehicle may be notified that the requested operation has been completed successfully.

According to still another embodiment of the invention, after controlling the locking mechanism to lock the at least one pressing member, the brake actuator is configured to repeatedly obtain the sensor signal. If the magnitude of the force represented by the sensor signal no longer matches the set force value, the brake actuator is configured generate the electric brake-force signal so that the electric motor causes the gear assembly to operate mechanically on the at least one pressing member to move towards or away from the rotatable member, i.e. to either increase or decrease the force applied to the rotatable member. Further, in response to the magnitude of the force represented by the sensor signal matching the set force value, the brake actuator is configured control the locking mechanism to lock the at least one pressing member, for example by ceasing to produce the electric brake-force signal. Thereby, it is ensured that the set force is maintained irrespective of any dimensional changes of the rotatable member, for example due to temperature variations.

According to one embodiment of the invention, the rotatable member is a brake disc, and the at least one pressing member contains first and second pressing members, which are arranged to act on first and second sides respectively of the brake disc. This type of disc brake design, which is commonly used in modern rail vehicles provides efficient and reliable braking capacity.

According to another embodiment of the invention, the brake system contains a backup power unit, which is configured to receive electric power from a power line in the rail vehicle during operation of the rail vehicle, accumulate the received electric power, for example in a rechargeable battery and/or at least one capacitive element, and provide the accumulated electric power to the brake actuator and the brake unit in case of an outage of the electric power on the power line. Hence, parking brake functionality may be reliably upheld over vastly extended periods of time. Namely, monitoring the force signal and adjusting the applied force if needed requires only extremely small amounts of energy.

According to embodiments of the invention, the brake actuator is connected to at least one data bus in the rail vehicle, which at least one data bus is configured to communicate control signals and/or status messages. Furthermore, the brake actuator may be configured to receive the parking-brake command as one of said control signals via one of the said data buses. This namely provides efficient and unfailing distribution of commands and data in rail vehicles of any type.

According to another aspect of the invention, the object is achieved by a computer-implemented method of controlling a brake actuator comprised in a brake system in a rail vehicle. The brake actuator is configured to receive a parking-brake command that designates a set force value. In response to receiving the parking-brake command the brake actuator is configured to feed an electric brake-force signal to a brake unit that is also comprised in the brake system. The brake unit is presumed to include: at least one pressing member, a rotatable member that is mechanically linked to at least one wheel of the rail vehicle, a gear assembly arranged to operate mechanically on the at least one pressing member so as to move the at least one pressing member towards or away from the rotatable member, an electric motor configured to, in response to the electric brake-force signal, act on the gear assembly so as to cause the gear assembly to operate mechanically on the at least one pressing member, a load-cell sensor configured to produce a sensor signal representing a magnitude of a force applied by the at least one pressing member on the rotatable member and a locking mechanism configured to lock the at least one pressing member. The method involves obtaining the sensor signal, and if the magnitude of the force represented by the sensor signal matches the set force value, the method involves controlling the locking mechanism to lock the at least one pressing member. Specifically, the locking mechanism is presumed to be self-locking, included in and forming an integral part of the gear assembly, and the controlling of the locking mechanism to lock the at least one pressing member involves discontinuing to generate the electric brake-force signal. The advantages of this method, as well as the preferred embodiments thereof are apparent from the discussion above with reference to the proposed brake system.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle equipped with a brake system according to one embodiment of the invention;
- Figure 2: shows a brake unit according to one embodiment of the invention;
- Figure 3: illustrates how a gear assembly may be implemented according to one embodiment of the invention;
- Figures 4a-b: show graphs exemplifying how the force applied to a rotatable member may vary over time and how an electric brake-force signal may be adjusted to compensate therefore according to one embodiment of the invention;
- Figures 5-6: show backup power units according to embodiments of the invention; and
- Figure 7: illustrates, by means of a flow diagram, the method according to the invention.

### DETAILED DESCRIPTION

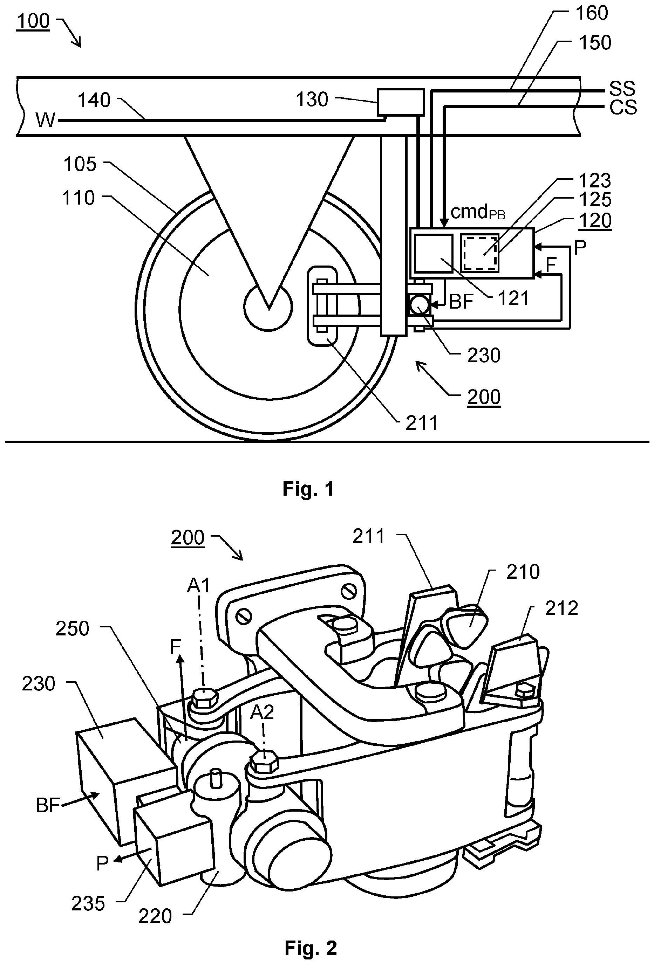

Figure 1 schematically illustrates a rail vehicle 100 equipped with a brake system according to one embodiment of the invention. In Figure 2, we see a brake unit 200 according to one embodiment of the invention, which brake unit 200 is included in the brake system. Besides the brake unit 200, the brake system also includes a brake actuator 120.

The brake actuator 120 is configured to receive a parking-brake command cmd_{PB} that designates a set force value Fₛₑₜ, i.e. a magnitude of a force at which the brake unit 200 shall apply a parking brake. For instance, the set force value Fₛₑₜ may be in a range from 1000 kN to 2000 kN, and preferably around 1600 kN. It should be noted that what constitutes an appropriate set force value Fₛₑₜ varies substantially depending on the specific implementation, e.g. the wheel diameter and the manner in which brake force is applied.

In response to receiving the parking-brake command cmd_{PB}, the brake actuator 120 is configured to generate an electric brake-force signal BF, which preferably may be represented by an electric current that has a particular magnitude, sign and duration.

The parking-brake command cmd_{PB} is configured to cause the at least one wheel 105 to remain immobile. When the rail vehicle shall resume its movement, a negating parking-brake command is produced which is configured cause the at least one pressing member 211 and 212 to release the applied braking force to the rotatable member 110, so as to enable the rotatable member 110 and the at least one wheel 105 to rotate again. Of course, in its simplest form, the at least one pressing member 211 and 212 may be arranged to act directly on the at least one wheel 105. In such a case, the wheel 105 itself constitutes the rotatable member 110.

The brake unit 200 is configured to receive the electric brake-force signal BF. The brake unit 200 contains the following components: at least one pressing member, here 211 and 212 respectively; a rotatable member 110; a gear assembly 220; an electric motor 230; a load-cell sensor 250 and a locking mechanism.

The at least one pressing member may be represented by first and second pressing members 211 and 212 respectively, for example calipers with respective brake pads 210 that are arranged to act on first and second sides respectively of the rotatable member 110 in the form of a brake disc. However, alternatively, the at least one pressing member may for example be represented by one or more brake shoes, which are arranged to act against the rotatable member 110 in the form of an interior surface of a brake drum.

The rotatable member 110 is mechanically linked to at least one wheel 105 of the rail vehicle 100, such that the rotatable member 110 rotates along with said at least one wheel 105. According embodiments of the invention, the rotatable member 110 may be represented by brake disc or a brake drum as discussed above.

The gear assembly 220 is arranged to operate mechanically on the at least one pressing member 211 and 212 so as to move the at least one pressing member 211 and 212 towards or away from the rotatable member 110, i.e. such that a brake force applied thereon increases, decreases or ceases entirely.

In response to the electric brake-force signal BF, the electric motor 230 is configured to act on the gear assembly 220 so as to, in turn, cause the gear assembly 220 to operate mechanically on the at least one pressing member 211 and 212.

If the electric brake-force signal BF is represented by an electric current, the magnitude thereof may indicate a speed at which the electric motor 230 and the at least one pressing member 211 and 212 shall move, the sign thereof may indicate a direction in which the electric motor 230 and the at least one pressing member 211 and 212 shall move, and the duration thereof may indicate for how long said movement shall continue. If for example the electric motor 230 is a stepper motor the electric brake-force signal BF may have alternative formats. In such a case, parameters like speed and/or duration may be defined by a PWM (pulse-width-modulated) signal.

The load-cell sensor 250 is configured to produce a sensor signal F that represents a magnitude of a force applied by the at least one pressing member 211 and 212 on the rotatable member 110. The load-cell sensor 250, may for example be of bending, shear, compression and/or tension type, and may be arranged at one or more locations in the brake unit 200. For example, the load-cell sensor 250 may be arranged on one of the first and second pressing members 211 and 212, or on a component inside the gear assembly 220.

The locking mechanism is configured to lock the at least one pressing member 211 and 212 in a specific position in relation to the rotatable member 110. The locking mechanism is self-locking and is included in the gear assembly 220 of which the locking mechanism also forms an integral part.

The brake actuator 120 is configured to obtain the sensor signal F and check if the magnitude of the force represented by the sensor signal F matches the set force value Fₛₑₜ. If the magnitude of the force represented by the sensor signal F matches the set force value Fₛₑₜ, the brake actuator 120 is configured to control the locking mechanism to lock the at least one pressing member 211 and 212. Since the locking mechanism is self-locking, the control is here trivial. According to one embodiment of the invention, the brake actuator 120 is configured to cause the at least one pressing member 211 and 212 to be locked by simply discontinuing the generation of the electric brake-force signal BF.

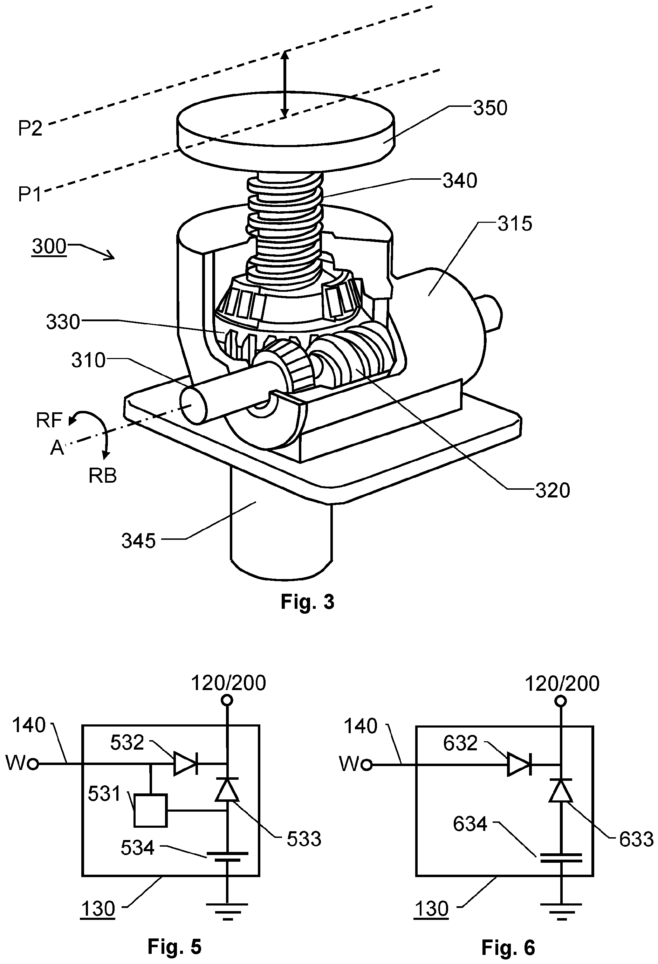

Referring to Figure 3, according to one embodiment of the invention, the gear assembly 220 contains a worm gear arrangement 300 with a gearing ratio configured to de facto prevent a position of the at least one pressing member 211 and 212 to be altered by movement of the at least one pressing member 211 and 212. Here, the locking mechanism thus is constituted by the worm gear arrangement itself. Specifically, this may mean that the worm gear arrangement 300 has gearing ratio of 1:47, or higher.

In other words, the locking mechanism, here represented by the worm gear arrangement 300, is configured to exclusively allow the at least one pressing member 211 and 212 respectively to be repositioned in response to action by the electric motor 230, which action, in turn, is caused by the electric brake-force signal BF.

Preferably, the gear assembly 220, which for example is represented by the worm gear arrangement 300, is configured to automatically lock the at least one pressing member 211 and 212 in any position in which the at least one pressing member 211 and 212 is located in when the electric brake-force signal BF ceases to be generated. This is generally attainable by including a screw coupling in the gear assembly 220, wherein the screw coupling has such a friction value that the torque required to overcome the friction exceeds the maximum torque possible to apply through action on the at least one pressing member 211 and 212. In a worm gear arrangement 300, such a self-locking functionality is typically attainable if the worm screw has a pitch angle below 8°, or more preferably below 5°. Most preferably, for dynamic self-locking capability, the worm screw has a pitch angle below 3°. In any case, if the locking mechanism is self-locking, the brake actuator 120 is configured to lock the at least one pressing member 211 and 212 by discontinuing the generation of the electric brake-force signal BF.

It should be noted that the gearing ratio and/or the pitch angle required to attain the self-locking functionality of the worm gear arrangement 300 depends on various material characteristics of the components included. Thus, inter alia for this reason the above values may vary to some extent.

According to one embodiment of the invention, the brake actuator 120 is configured to generate a status message SS confirming that the parking-brake command cmd_{PB} has been effected in response to the magnitude of the force represented by the sensor signal F matching the set force value Fₛₑₜ. Thus, a driver and/or any other personnel onboard or outside of the rail vehicle may be notified that the requested parking brake has been completed successfully.

According to one embodiment of the invention, after having controlled the locking mechanism to lock the at least one pressing member 211 and 212, the brake actuator 120 is configured to repeatedly obtain the sensor signal F and check if the magnitude of the force represented by the sensor signal F still matches the set force value Fₛₑₜ. If the brake actuator 120 finds that the magnitude of the force represented by the sensor signal F no longer matches the set force value Fₛₑₜ, the brake actuator 120 is configured to generate the electric brake-force signal BF so that the electric motor causes the gear assembly 220 to operate mechanically on the at least one pressing member 211 and 212 to move towards or away from the rotatable member 110. In most cases, such an adjustment involves moving the at least one pressing member 211 and 212 towards the rotatable member 110 to thus increase the applied force, for instance because the rotatable member 110 in the form of a brake disc has cooled off after that the parking brake was activated, and as a result, the brake disc has become slightly thinner. Technically, of course, the opposite scenario is also conceivable, i.e. that the rotatable member 110 has increased a dimension that renders the force applied thereto excessive, which, in turn, risks damaging one or more components in the brake unit 200. In response to that the magnitude of the force represented by the sensor signal F matches the set force value Fₛₑₜ, the brake actuator 120 is further configured to control the locking mechanism to lock the at least one pressing member 211 and 212.

According to one embodiment of the invention, the magnitude of the force represented by the sensor signal F is considered to match the set force value Fₛₑₜ if the force represented by the sensor signal F is within a predefined range F_{R} from the set force value Fₛₑₜ.

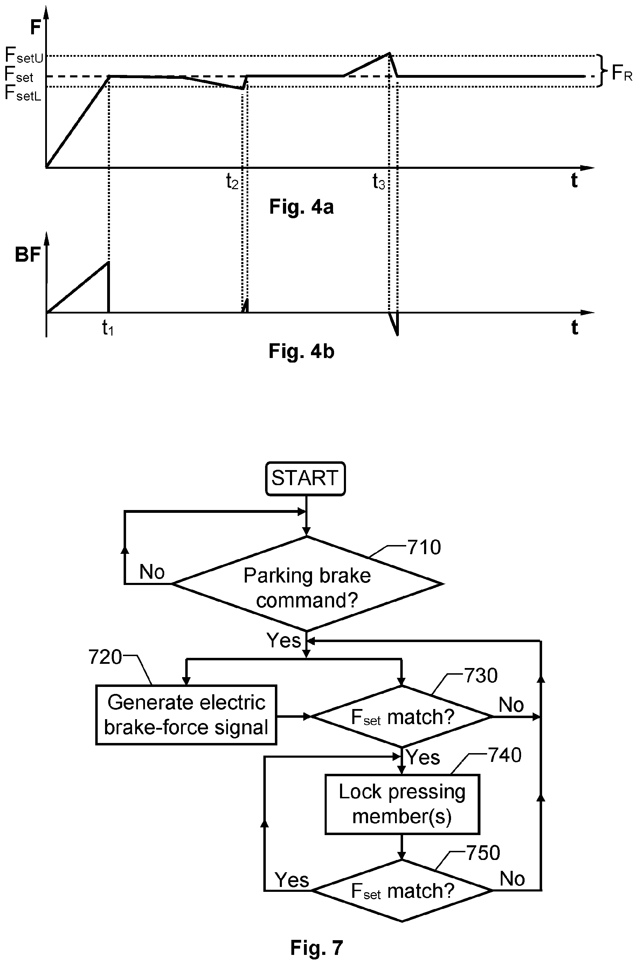

Figure 4a shows a graph that exemplifies how the sensor signal may vary over time t and Figure 4b shows a graph that exemplifies how the electric brake-force signal BF may be adjusted to compensate for the variations in the force F over time t. In Figure 4a, the predefined range F_{R} extends from lower threshold level F_{setL} below the set force value Fₛₑₜ to an upper threshold level F_{setU} above the set force value Fₛₑₜ.

In the illustrated example, the set force value Fₛₑₜ is reached at a first point in time t₁. Therefore, at this point in time t₁, the brake actuator 120 ceases to generate the electric brake-force signal BF, which causes the at least one pressing member 211 and 212 to be locked and the force represented by the sensor signal F to remain at the set force value Fₛₑₜ. However, after some time, the force F starts to drop for some reason, and at a second point in time t₂, the force F falls below the lower threshold level F_{setL}. Therefore, at this point in time t₂, the brake actuator 120 generates the electric brake-force signal BF, such that the pressing members 211 and 212 move towards the rotatable member 110 until the set force value Fₛₑₜ is reached whereafter the brake actuator 120 again ceases to generate the electric brake-force signal BF. This causes the at pressing members 211 and 212 to be locked and the force represented by the sensor signal F to remain at the set force value Fₛₑₜ. Nevertheless, after some time, the force F begins to increase for some reason, and at a third point in time t₃, the force F exceeds the upper threshold level F_{setU}. Therefore, at the third point in time t₃, the brake actuator 120 generates the electric brake-force signal BF, such that the pressing members 211 and 212 move away from the rotatable member 110 until the set force value Fₛₑₜ is reached once more.

Figure 3 shows an example of the gear assembly 220 according to one embodiment of the invention, where the gear assembly 220 is implemented by a worm gear arrangement 300.

Here, the electric motor 230 produces mechanical power that enters via a power transmission shaft 310. The electric motor 230 is configured to rotate the power transmission shaft 310 in a forward direction RF or a backward direction RB. As a result, a load pad 350 is fed outward or inward, for example between first and second positions P1 and P2 respectively by action of an input worm screw 320 on a worm gear 330 that acts on a lifting screw 340. Preferably, the worm gear arrangement 300 further includes first and second protection tubes 315 and 345 covering the input worm 320 and the lifting screw 340 respectively.

As discussed above, the worm gear arrangement 300 has such a gearing ratio that movements in the opposite direction is de facto impossible, i.e. pushing/pulling the load pad 350 to cause the power transmission shaft 310 to rotate in the forward or backward directions RF/RB. Consequently, the specified position interrelationship between the first and second pressing members 211 and 212 cannot be altered by movement of the pressing members 211 and 212. In other words, the worm gear arrangement 300 itself constitutes the self-locking mechanism.

As mentioned above, the parking-brake command cmd_{PB} may be sent as a control signal CS over a data bus 150 in the rail vehicle 100. According to one embodiment of the invention, the rail vehicle 100 contains at least one first data bus 150 configured to communicate control signal CS. Preferably, the rail vehicle 100 also contains at least one second data bus 160, which is configured to communicate status messages SS, for example reflecting a current state of the brake, and/or the force F applied by the first and second pressing members 211 and 212.

Figures 5 and 6 show a backup power unit 130 according to embodiments of the invention. The backup power unit 130 is configured to receive electric power W from a power line 140 in the rail vehicle 100 during operation of the rail vehicle 100. Typically, electric power W is fed into the rail vehicle 100 via an external overhead line and an onboard current collector. The backup power unit 130 is configured to accumulate the received electric power W and feed at least a portion of the accumulated electric power to the brake actuator 120 and the brake unit 200 in case of an outage in the electric power W on the power line 140.

The backup power unit 130 shown in Figure 5 is configured to receive electric power W from the power line 140 during operation of the rail vehicle 100 and accumulate the received electric power W. To this end, the backup power unit 130 includes a battery charger 531 that is connected to the power line 140. The battery charger 531 is configured to transfer electric power W received from the power line 140 to at least one rechargeable battery 534 in the backup power unit 130. Preferably, a first diode 532, or equivalent element is arranged on the power line 140, which first diode 532 is configured to prevent electrical energy to be fed out from backup power unit 130 to the rail vehicle's 100 power line 140. For similar reasons, the backup power unit 130 preferably also includes a second diode 533, or equivalent element, which is arranged on the power line 140. The second diode 533 is configured to prevent electrical energy to be fed out from either of the brake actuator 120 or the brake unit 200 into the least one rechargeable battery 534. Namely, this might damage the least one rechargeable 534 as well as the brake actuator 120 and/or the brake unit 200. Specifically, if the electric power W on the power line 140 fails, the at least one rechargeable battery 534 is here arranged to feed electric power to the brake actuator 120 and the brake unit 200, for example via the second diode 533.

The backup power unit 130 shown in Figure 6 is likewise configured to receive electric power W from the power line 140 during operation of the rail vehicle 100 and accumulate the received electric power W. Here, the backup power unit 130 includes at least one capacitive element 634. Analogous to the above, the backup power unit 130 preferably also includes first and second diodes 632 and 633 respectively, or equivalent elements. The first diode 632 is connected to the power line 140 to receive electric power W therefrom, and transfer the received electric power W received to the at least one capacitive element 634. The first diode 632 is also configured to prevent electrical energy to be fed out from the backup power unit 130 into the rail vehicle's 100 power line 140. If the electric power W on the power line 140 fails, the at least one capacitive element 634 is arranged to feed electric power to the brake actuator 120 and the brake unit 200. To avoid that electrical energy is fed out from either of the brake actuator 120 or the brake unit 200 into the at least one capacitive element 634, the second diode 633 is arranged between an output of the backup power unit 130 and the at least one capacitive element 634. Specifically, if the electric power W on the power line 140 fails, the at least one capacitive element 634 is here arranged to feed electric power to the brake actuator 120 and the brake unit 200, for example via the second diode 633.

Returning now to Figure 1, it is generally advantageous if the brake actuator 120 is configured to effect the above procedure in an automatic manner by executing a computer program. Therefore, the brake actuator 120 may include at least one processing unit 121 and a memory unit 125, i.e. non-volatile data carrier, storing a computer program 123, which, in turn, contains software for making the at least one processing unit 121 execute the actions mentioned in this disclosure when the computer program 123 is run on the at least processing unit 121.

To sum up, and with reference to the flow diagram in Figure 7, we will now describe the computer-implemented method according to the invention of controlling a brake system of a rail vehicle.

In a step 710, it is checked if a parking brake command has been received. If the parking brake command is received, parallel steps 720 and 730 follow; and otherwise, the procedure loops back and stays in step 710.

In step 720, an electric brake-force signal is generated, which electric brake-force signal aims at causing at least one pressing member of a brake unit to apply a force to a rotatable member of the brake unit, where the applied force aims at matching a set force value specified by the parking brake command. In a step 730, it is checked if the force applied by the at least one pressing member to the rotatable member matches the set force value. If the thus applied force matches the set force value, a step 740 follows; and otherwise, the procedure loops back to steps 720 and 730.

In step 740, the at least one pressing member is locked in its current position. Since, according to the invention, the locking mechanism is self-locking, included in and forms an integral part of the gear assembly, the at least one pressing member is locked in its current position simply by ceasing to generate the electric brake-force signal.

A subsequent step 750 checks if the force applied by the at least one pressing member to the rotatable member still matches the set force value; and if so, the procedure loops back to step 740. In practice this means that no electric brake-force signal is generated, and consequently the at least one pressing member remains locked in its current position. If, however, it is found in step 750 that the force applied by the at least one pressing member to the rotatable member no longer matches the set force value, the procedure loops back to steps 720 and 730.

Preferably, the check in step 750 is repeated at intervals that are extended each time the result of the check is positive. For instance, the first time after having locked the at least one pressing member in step 740, the repeated check in step 750 may be carried out 1 minute later. If the result of this check is also positive, repeated check is performed after 2 minutes. If also the result of this check is positive, the check is repeated after 4 minutes, and so on. Nevertheless, there is preferably an upper time limit for how much the checking intervals may be extended, say up to once per hour, or once day.

All of the process steps, as well as any sub-sequence of steps, described with reference to Figure 7 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake system for a rail vehicle (100), which brake system comprises:
a brake actuator (120) configured to receive a parking-brake command (cmd_{PB}) designating a set force value (Fₛₑₜ), and in response to receiving the parking-brake command (cmd_{PB}) generate an electric brake-force signal (BF), and
a brake unit (200) configured to receive the electric brake-force signal (BF), the brake unit (200) comprising:
at least one pressing member (211, 212),
a rotatable member (110) being mechanically linked to at least one wheel (105) of the rail vehicle (100),
a gear assembly (220) arranged to operate mechanically on the at least one pressing member (211; 212) so as to move the at least one pressing member (211; 212) towards or away from the rotatable member (110),
an electric motor (230) configured to, in response to the electric brake-force signal (BF), act on the gear assembly (220) so as to cause the gear assembly (220) to operate mechanically on the at least one pressing member (211; 212),
a load-cell sensor (250) configured to produce a sensor signal (F) representing a magnitude of a force applied by the at least one pressing member (211, 212) on the rotatable member (110), and
a locking mechanism (300) configured to lock the at least one pressing member (211; 212),
wherein the brake actuator (120) is configured to obtain the sensor signal (F), check if the magnitude of the force represented by the sensor signal (F) matches the set force value (Fₛₑₜ), and if the magnitude of the force represented by the sensor signal (F) matches the set force value (Fₛₑₜ) control the locking mechanism (300) to lock the at least one pressing member (211; 212), **characterized in that** the locking mechanism (300) is self-locking, included in and forms an integral part of the gear assembly (220).

2. The brake system according to claim 1, wherein the gear assembly (220) comprises a worm gear arrangement (300) with a gearing ratio configured to de facto prevent a position of the at least one pressing member (211, 212) to be altered by movement of the at least one pressing member (211; 212), the locking mechanism thus being constituted by the worm gear arrangement (300).

3. The brake system according to any of claims 1 or 2, wherein the locking mechanism (300) is configured to exclusively allow the at least one pressing member (211, 212) to be repositioned in response to action by the electric motor (230), which action is caused by the electric brake-force signal (BF).

4. The brake system according to any one of the preceding claims, wherein:
the gear assembly (220) is configured to automatically lock the at least one pressing member (211; 212) in any position in which the at least one pressing member (211; 212) is located in when the electric brake-force signal (BF) ceases to be generated, and
the brake actuator (120) is configured to control the locking mechanism (300) to lock the at least one pressing member (211; 212) by discontinuing the generation of the electric brake-force signal (BF).

5. The brake system according to any one of the preceding claims, wherein the brake actuator (120) is further configured to:
generate a status message (SS) confirming that the parking brake command (cmd_{PB}) has been effected in response to the magnitude of the force represented by the sensor signal (F) matching the set force value (Fₛₑₜ).

6. The brake system according to any one of the preceding claims, wherein the magnitude of the force represented by the sensor signal (F) is considered to match the set force value (Fₛₑₜ) if the force represented by the sensor signal (F) is within a predefined range (F_{R}) from the set force value (Fₛₑₜ).

7. The brake system according to any one of the preceding claims, wherein after controlling the locking mechanism (300) to lock the at least one pressing member (211; 212), the brake actuator (120) is configured to:
obtain, repeatedly, the sensor signal (F), and if the magnitude of the force represented by the sensor signal (F) no longer matches the set force value (Fₛₑₜ)
generate the electric brake-force signal (BF) so that the electric motor causes the gear assembly (220) to operate mechanically on the at least one pressing member (211; 212) to move towards or away from the rotatable member (110), and in response to the magnitude of the force represented by the sensor signal (F) matching the set force value (Fₛₑₜ),
control the locking mechanism (300) to lock the at least one pressing member (211; 212).

8. The brake system according to any one of the preceding claims, wherein:
the rotatable member (110) is a brake disc, and
the at least one pressing member comprises first and second pressing members (211; 212) arranged to act on first and second sides respectively of the brake disc.

9. The brake system according to any one of the preceding claims, further comprising a backup power unit (130) configured to:
receive electric power (W) from a power line (140) in the rail vehicle (100) during operation of the rail vehicle (100);
accumulate the received electric power (W); and
provide the accumulated electric power to the brake actuator (120) and the brake unit (200) in case of an outage of the electric power (W) on the power line (140).

10. The brake system according to claim 9, wherein the backup power unit (130) comprises:
at least one rechargeable battery (534), and
a battery charger (531) connected to the power line (140), which battery charger (531) is configured to transfer electric power (W) received from the power line (140) to the at least one rechargeable battery (534),
wherein the at least one rechargeable battery (534) is arranged to feed electric power to the brake actuator (120) and the brake unit (200) if the electric power (W) on the power line (140) fails.

11. The brake system according to claim 9, wherein the backup power unit (130) comprises:
at least one capacitive element (634), and
a rectifier (632) connected to the power line (140) and configured to transfer electric power (W) received from the power line (140) to the at least one capacitive element (634),
wherein the at least one capacitive element (634) is arranged to feed electric power to the brake actuator (120) and the brake unit (200) if the electric power (W) on the power line (140) fails.

12. The brake system according to any one of the preceding claims, wherein the brake actuator (120) is connected to at least one data bus (150, 160) in the rail vehicle (100), which at least one data bus (150, 160) is configured to communicate at least one of control signals (CS) and status messages (SS).

13. The brake system according to claim 12, wherein the brake actuator (120) is configured to receive the parking brake command (cmd_{PB}) as one of the at least one control signal (CS) via one of the at least one data bus (150).

14. A computer-implemented method for a brake actuator (120) comprised in a brake system in a rail vehicle (100), which actuator (120) is configured to receive a parking-brake command (cmd_{PB}) designating a set force value (Fₛₑₜ), and in response to receiving the parking-brake command (cmd_{PB}) generate an electric brake-force signal (BF) to a brake unit (200) comprised in the brake system, which brake unit (200) comprises: at least one pressing member (211, 212), a rotatable member (110) being mechanically linked to at least one wheel (105) of the rail vehicle (100), a gear assembly (220) arranged to operate mechanically on the at least one pressing member (211; 212) so as to move the at least one pressing member (211; 212) towards or away from the rotatable member (110), an electric motor (230) configured to, in response to the electric brake-force signal (BF), act on the gear assembly (220) so as to cause the gear assembly (220) to operate mechanically on the at least one pressing member (211; 212), a load-cell sensor (250) configured to produce a sensor signal (F) representing a magnitude of a force applied by the at least one pressing member (211, 212) on the rotatable member (110), and a locking mechanism (300) configured to lock the at least one pressing member (211; 212), and the method comprising
obtaining the sensor signal (F), and if the magnitude of the force represented by the sensor signal (F) matches the set force value (Fₛₑₜ),
controlling the locking mechanism (300) to lock the at least one pressing member (211; 212),
**characterized by** the locking mechanism (300) being self-locking, included in and forming an integral part of the gear assembly (220), and the controlling of the locking mechanism (300) to lock the at least one pressing member (211; 212) comprising:
discontinuing to generate the electric brake-force signal (BF)

15. A computer program (123) loadable into a non-volatile data carrier (125) communicatively connected to a processing unit (121), the computer program (123) comprising software for executing the method according to any one of the preceding claims when the computer program (123) is run on the processing unit (121).

16. A non-volatile data carrier (125) containing the computer program (123) of the claim 15.
